**Europäisches Patentamt**

**European Patent Office**

**Office européen des brevets**

(19)

(11) Veröffentlichungsnummer : **0 274 461 B1**

(12) # EUROPÄISCHE PATENTSCHRIFT

(45) Veröffentlichungstag der Patentschrift :
**20.05.92 Patentblatt 92/21**

(51) Int. Cl.$^5$ : **B63B 5/24,** E04B 2/00, B63B 3/16

(21) Anmeldenummer : **88890002.4**

(22) Anmeldetag : **07.01.88**

(54) Wandelement und Verfahren zu dessen Herstellung.

(30) Priorität : **08.01.87 AT 23/87**

(43) Veröffentlichungstag der Anmeldung :
**13.07.88 Patentblatt 88/28**

(45) Bekanntmachung des Hinweises auf die Patenterteilung :
**20.05.92 Patentblatt 92/21**

(84) Benannte Vertragsstaaten :
**AT DE FR GB NL SE**

(56) Entgegenhaltungen :
**DE-B- 1 147 133**

(73) Patentinhaber : **Fuchs, Herbert**
**3 & 5 West's Centre**
**St. Helier Jersey Channel Islands (GB)**

(72) Erfinder : **Fuchs, Herbert**
**3 & 5 West's Centre**
**St. Helier Jersey Channel Islands (GB)**

(74) Vertreter : **Kretschmer, Adolf, Dipl.-Ing. et al**
**Patentanwälte Dipl.Ing. A. Kretschmer Dr.**
**Thomas M. Haffner Schottengasse 3a**
**A-1014 Wien (AT)**

## Beschreibung

Die Erfindung betrifft ein Wandelement insbesondere für die Verwendung als Wandung für Bootskörper, Behälter od.dgl., bestehend aus gelochten, miteinander verschweißbaren metallischen Blechen, wobei das gelochte Blech in Kunststoff eingebettet ist und die äußere und innere Kunststoffschicht durch die Löcher im Blech miteinander stoffschlüssig verbunden sind, sowie ein Verfahren zur Herstellung eines solchen Wandelementes.

Aus der DE-C- 1 147 133 ist bereits ein Bootskörper bekanntgeworden, dessen aus einem metallischen Gerüst bestehende Wandung in eine beim Aufbringen plastische Masse eingebettet ist. Das Gerüst besteht hiebei aus einer dünnwandigen, Löcher aufweisenden Gitterblechhaut, auf welche beiderseits ein glasfaserverstärktes Kunstharzgewebe aufgebracht ist, welches durch die Löcher des Gitters stoffschlüssig miteinander verbunden ist. Ein beim bestimmungsgemäßen Gebrauch einer andauernden unregelmäßigen Formänderung nach allen drei Raumachsen ausgesetzter Bootskörper ist erheblichen Biege-und Torsionsbeanspruchungen ausgesetzt, die ebenso wie die durch den Seeschlag hervorgerufenen elastischen Einbeulungen dynamischer Natur sind. Hinzu kommt noch die Verformung durch Wärmedehnung. Wenn die auf Deformation wechselnd belasteten Bootskörperteile aus Schichten verschiedener Materialen aufgebaut sind, welche untereinander nur eine schwache Oberflächenhaftung besitzen, wie dies insbesondere bei Metall und Kunstharz üblich ist, so führen die über die Dicke des Verbundmaterials auftretenden Scherspannungen zum Bruch an der Grenzschicht und zum Verschieben der verschiedenen Materialschichten gegeneinander. Wenn eine solche Verschiebung wie bei der DE-C durch den Lochverbund der beiden unterschiedlichen Materialien in ihrer Position relativ zueinander nicht stattfinden kann, so wird das Material, das zuerst über seine Elastizitätsgrenze hinaus beansprucht wird, bleibend verformt oder gebrochen. Diese Tendenzen werden verstärkt, wenn die verbundenen Materialien unterschiedliche Wärmedehnungskoeffizienten aufweisen, wodurch sich bei thermischer Beanspruchung der Verbund lockert, was zur Bildung von Haarrissen und kleinen Hohlräumen führt. In der Folge kann durch Kapillarwirkung das Seewasser eindringen und den Metallkörper chemisch angreifen.

Die vorliegende Erfindung zielt nun darauf ab, ein Wandelement der eingangs genannten Art zur Verfügung zu stellen, welches auch bei großen auftretenden Scherkräften bzw. bei thermischer Beanspruchung einen dauerhaften Verbund des metallischen Körpers mit der Kunststoffdeckschichte sicherstellt. Zur Lösung dieser Aufgabe ist das erfindungsgemäße Wandelement so ausgebildet, daß zwischen dem Blech und den Kunststoffschichten eine Elastomerenschicht vorgesehen ist, die das Metall beiderseits und im Bereich der Löcher umgibt, diese aber frei läßt. Der Elastomerenüberzug bewirkt, daß das Metall nicht direkt und starr, sondern gleichsam schwimmend im Kunststoffverbundmaterial eingebettet ist, was eine begrenzte relative Bewegung der verschiedenartigen Materialien zueinander ermöglicht. Eine derartige elastisch verformbare Zwischenschichte kann die unterschiedliche Verformung auf Grund der verschiedenen thermischen Ausdehnungskoeffizienten der Kunststoffschichte und des Metallkörpers, ebenso wie die an der Grenzschichte auftretenden Scherspannungen mit Sicherheit aufnehmen, wodurch eine bedeutend längere Standzeit des erfindungsgemäßen Wandelementes erzielt werden kann. Als Elastomer werden hier vorzugsweise gummielastische Substanzen natürlichen oder synthetischen Ursprungs verwendet. Das als Deckschichte verwendete Kunststoffmaterial, in dem der umhüllte Metallkörper eingebettet wird, ist insbesondere faserverstärkter Kunststoff.

In besonders bevorzugter Weise wird bei Verwendung des Wandelementes als Wandung für einen Bootskörper das formende Metallgerüst des Bootskörpers ebenfalls mit der Elastomerenschicht und der Kunststoffschicht überzogen. Durch ein derartiges Überziehen des Metallgerüstes des Bootes können, insbesondere bei den flächigen Teilen des Metallgerüstes, die auf das Metallgerüst besonders stark wirkenden Scher- und Torsionsbeanspruchungen mit Sicherheit aufgenommen werden.

Da durch die undefinierten Bewegungen und Deformationen des Bootskörpers eine bevorzugte Richtung der relativen Bewegung der Schichten zueinander nicht gegeben ist, sind in vorteilhafter Weise die Löcher des Blechs kreisförmig mit einem Durchmesser, welcher wenigstens dem Zehnfachen der Blechstärke entspricht, ausgebildet. Dadurch, daß der Durchmesser einer Kreisöffnung mindestens das Zehnfache der verwendeten Blechstärke beträgt, treffen die Fasern der Kunststoffschichte erst in einem gewissen Abstand von der Blechkante aufeinander und verlaufen im Inneren des Loches parallel. Der Flächenbereich, in dem die Fasern parallel liegen, sollte einen möglichst hohen Prozentsatz der Lochfläche ausmachen, um einen sicheren Verbund des Wandelementes zu gewährleisten. Weiters müssen die Lochflächen so groß gewählt werden, daß bei einer elastischen Verformung die Scherspannungen zwischen den zwei gegenüberliegenden Faserlaminatschichten ausreichend aufgenommen werden.

Das Verfahren zur Herstellung eines erfindungsgemäßen Wandelementes, dessen Blech eine genügende mechanische Festigkeit für den vorgesehenen Verwendungszweck aufweist, besteht insbesondere darin, daß die ans äußerer-und innerer Kunststoffschicht bestehenden Deckschichte(n) durch ein dafür geeignetes Verfahren, wie Flammspritzen von Thermoplasten, beispielsweise Polyethylen oder Polyamid, aufgebracht wird (werden). Auf diese Weise wird ein besonders inniger Verbund zwischer der Elastomerenschicht und der bzw. den Deckschichten erzielt.

Durch ein derartiges Verfahren ist es möglich, die Vorteile der Kunststoffbauweise, insbesondere unter Verwendung von faserverstärkten Kunststoffe, mit den Vorteilen der Metallbauweise zu verbinden. Es wird insbesondere die Gefahr des Verlustes flächiger Bruchstücke, wie sie bei Kunststoffbooten besteht, vermieden.

Solange bei Überbeanspruchungen die Streckgrenze des Metalls nicht überschritten wird, entstehen im Gegensatz zu herkömmlichen Laminaten weder großflächige Löcher noch durchlaufende Risse, sondern eine spinnwebenartige Rißstruktur des Laminats mit einer Vielzahl von Haarrissen im Beschädigungsbereich und festen Zusammenhalt der Bruchstücke mit dem Metallkörper infolge des Lochverbundes. Dadurch tritt durch diese Risse nur Sickerwasser ein und das Leck kann unter Kontrolle gehalten werden.

Um besonders hochfeste Wandelemente auszubilden ist mit Vorteil auf der Kunststoffschicht wenigstens eine weitere elastomerenüberzogene Blechschichte angeordnet und anschließend eine weitere Kunststoffschicht so aufgebracht, daß sie sich mit der vorhergehenden verbindet. Dadurch wird es möglich, auch solche Kunststoffe für die Herstellung von Wandelementen zu verwenden, die bisher nicht verarbeitet werden konnten, da sie über keine ausreichende Festigkeit verfügen, die jedoch andere vorteilhafte Eigenschaften aufweisen, wie beispielsweise: hohe Elastizität, Bruchdehnung und Säurebeständigkeit.

Die Erfindung wird nachfolgend an Hand der Zeichnung näher erläutert. Dabei zeigt: Fig. 1 einen Bootskörper mit dem erfindungsgemäßen Wandelement; Fig. 2 ein Detail des Wandelementes mit teilweise abgenommenen Schichten und Fig. 3 und 4 zeigen Schnitte durch das Wandelement.

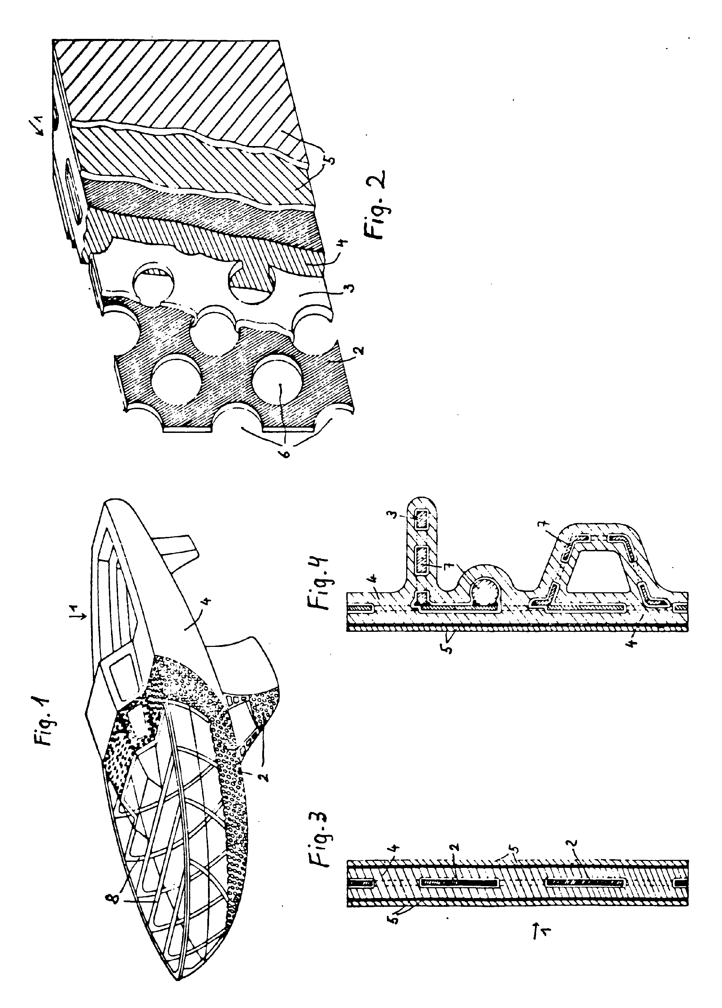

In Fig. 1 ist ein Bootskörper mit dem erfindungsgemäßen Wandelement 1, welcher aus einem Metallgerüst 8 besteht, dem hauptsächlich formfixierende, gegebenenfalls auch festigkeitsverstärkende Aufgaben zukommen, gezeigt. Auf dem Metallgerüst 8 ist eine Beplattung aus durchbrochenem Blech 2 aufgebracht. Auf diese Blechhaut wird anschließend mittels gängiger Beschichtungsverfahren, wie Streichen, Spritzen oder Tauchen, ein gummielastischer Überzug 3 aufgebracht. Wie aus Fig. 2 ersichtlich ist, erstreckt sich dieser Überzug über die Ränder der Löcher 6 des Bleches 2, läßt diese aber im wesentlichen frei. In der in Fig. 1 gezeigten Ausbildung erstreckt sich der Elastomerenüberzug auch über das Metallgerüst 8.

Auf das so vorbehandelte Wandelement 1 wird anschließend in herkömmlicher Weise ein insbesondere faserverstärkter Kunststoff von außen und innen angebracht, wobei sich die Kunststoffschichten 4 durch die Löcher 6 des Bleches 2 dauerhaft miteinander verbinden und das eingeschlossene Metall hermetisch umhüllt wird.

Auf dieses Wandelement 1 können gegebenenfalls farbtragende Schichten, Farben oder Oberflächenschichten 5 (z.B. Kitt und Gelcoat) aufgetragen werden.

Wenn auch das Metallgerüst 8 überzogen wird, werden flächige Teile 7 dieses Gerippes bevorzugt aus durchbrochenem Material hergestellt, wie dies aus Fig. 4 ersichtlich ist.

Die Erfindung ist nicht auf das dargestellte Ausführungsbeispiel beschränkt. So ist es möglich, nur Teile des Gerüstes 8 zu überziehen oder auch die Beplattung 2 mehrschichtig auszuführen, soferne die Kunststoffschichten 4 sich, wie beispielsweise beim Flammspritzen, fest verbinden. Die Form und Größe der Löcher 6 muß nicht über den gesamten Bereich gleich sein, sondern kann in Abhängigkeit von den Beanspruchungen der Wandelemente 1 variiert werden.

## Patentansprüche

1. Wandelement (1) insbesondere für die Verwendung als Wandung für Bootskörper, Behälter od.dgl., bestehend aus gelochten, miteinander verschweißbaren metallischen Blechen, wobei das gelochte Blech in Kunststoff eingebettet ist und die äußere und innere Kunststoffschicht durch die Löcher im Blech miteinander stoffschlüssig verbunden sind, dadurch gekennzeichnet, daß zwischen dem Blech (2) und den Kunststoffschichten (4) eine Elastomerenschicht (3) vorgesehen ist, die das Metall beiderseits und im Bereich der Löcher (6) umgibt, diese aber frei läßt.

2. Wandelement nach Anspruch 1, dadurch gekennzeichnet, daß bei Verwendung des Wandelementes (1) als Wandung für einen Bootskörper das formende Metallgerüst (8) des Bootskörpers ebenfalls mit der Elastomerenschicht (3) und der Kunststoffschicht (4) überzogen ist.

3. Wandelement nach Anspruch 1 oder 2, dadurch gekennzeichnet, daß die Löcher (6) des Blechs (2) kreisförmig mit einem Durchmesser, welcher wenigstens dem Zehnfachen der Blechstärke entspricht, ausgebildet sind.

4. Verfahren zur Herstellung eines Wandelementes nach Anspruch 1, 2 oder 3, dessen Blech eine genügende mechanische Festigkeit für den vorgesehenen Verwendungszweck aufweist, dadurch gekennzeichnet, daß die ans änßerer-und innerer Kunststoffschicht(4) bestehenden Deckschichte(n) durch ein dafür geeignetes Verfahren, wie Flammspritzen von Thermoplasten, beispielsweise Polyethylen oder Polyamid, aufgebracht wird (werden).

5. Verfahren nach Anspruch 4, dadurch gekennzeichnet, daß auf der Kunststoffschicht wenigstens eine weitere elastomerenüberzogene Blechschichte angeordnet und anschließend eine weitere Kunststoffschicht so aufgebracht wird, daß sie sich mit der vorhergehenden verbindet.

## Claims

1. Wall element (1), in particular for use as the side of boat hulls, vessels or the like, comprising perforated metal sheets which can be welded to one another, the perforated sheet being embedded in plastic and the outer layer and inner layer of plastic being bonded integrally to each other through the perforations in the sheet, characterised in that between the sheet (2) and the layers of plastic (4) there is a layer of elastomer (3), which surrounds the metal on both sides and in the region of the perforations (6), but leaves the latter free.

2. Wall element according to Claim 1, characterised in that where the wall element (1) is used as the side of a boat hull, the shaping metal framework (8) of the boat hull is likewise coated with the layer of elastomer (3) and the layer of plastic (4).

3. Wall element according to Claim 1 or 2, characterised in that the perforations (6) of the sheet (2) are of a circular design with a diameter which corresponds to at least ten times the sheet thickness.

4. Method of producing a wall element according to Claim 1, 2 or 3, the sheet of which has an adequate mechanical strength for the intended application, characterised in that the outer layer(s), comprising the outer layer and inner layer of plastic (4), is (are) applied by a method suitable for this purpose, such as flame spraying of thermoplastics, for example polyethylene or polyamide.

5. Method according to Claim 4, characterised in that at least one further elastomer-coated sheet layer is arranged on the layer of plastic and subsequently a further layer of plastic is applied in such a way that it bonds to the preceding layer.

## Revendications

1. Elément de paroi (1), en particulier pour une utilisation comme paroi de coque de navire, récipient ou analogue, constitué de tôles métalliques perforées soudables les unes aux autres, la tôle perforée étant noyée dans une matière plastique et les couches de matière plastique, extérieure et intérieure, étant reliées mutuellement par liaison de matière à travers les trous dans la tôle, caractérisé par le fait qu'entre la tôle (2) et les couches de matière plastique (4) est prévue une couche en élastomère (3) qui entoure le métal des deux côtés et dans la zone des trous (6), mais laisse ces derniers libres.

2. Elément de paroi selon la revendication 1, caractérisé par le fait que pour une utilisation de l'élément de paroi (1) comme paroi de coque de navire, l'ossature métallique (8) de base de la coque de navire est revêtue à la fois avec la couche en élastomère (3) et la couche de matière plastique (4).

3. Elément de paroi selon la revendication 1 ou 2, caractérisé par le fait que les trous (6) de la tôle (2) sont circulaires avec un diamètre qui correspond au moins à dix fois l'épaisseur de la tôle.

4. Procédé pour fabriquer un élément de paroi selon la revendication 1, 2 ou 3 dont la tôle présente une résistance mécanique suffisante pour les applications prévues, caractérisé par le fait que la ou les couches constituées d'une couche de matière plastique (4) extérieure et intérieure sont mises en place par un procédé approprié à cet effet, tel que la plastification à chaud de thermoplastiques, en particulier de polyéthylène ou polyamide.

5. Procédé selon la revendication 4, caractérisé par le fait que sur la couche en matière plastique est mise en place au moins une autre couche de tôle revêtue d'élastomère et qu'ensuite on met en place une autre couche de matière plastique de manière telle qu'elle est liée aux précédentes.

Fig. 1

Fig. 2

Fig. 3

Fig. 4